# EUROPEAN PATENT SPECIFICATION

(11) **EP 2 158 048 B1**
(45) Date of publication and mention of the grant of the patent: **28.07.2010**
(21) Application number: 08737265.2
(22) Date of filing: 09.05.2008
(51) Int. Cl.: B21C 37/08, B21D 51/18, B23K 20/12

(54) **METHOD FOR MANUFACTURING TANKS**
VERFAHREN ZUR HERSTELLUNG VON TANKS
PROCÉDÉ DE FABRICATION DE RÉSERVOIRS

(30) Priority: 11.05.2007 US 747497
(43) Date of publication of application: 03.03.2010
(73) Proprietor: LUXFER GROUP LIMITED, Salford Greater Manchester M50 3SP (GB)
(72) Inventor: JOHANSEN, Kjeld, Huntingdon Beach, CA 92649 (US)
(74) Representative: Williams, Ceili
(86) International application number: PCT/GB2008/050341
(87) International publication number: WO 2008/139222

(56) References cited:
- EP-A- 1 240 969
- WO-A-00/03818
- US-A1- 2004 041 005
- US-A1- 2006 260 376
- US-B1- 6 364 197

## Description

This invention relates to a method of making friction stir welded metal tanks or liners for use in a pressure vessel from flat plate and to a friction stir welded tank or liner (see e.g US-B-6 364 197).

Tanks are containers intended to store a fluid, in particular gas, probably, but not necessarily, under pressure. The term tank thus embraces items commonly used for gas storage, such as cylinders, and liners for use in pressure vessels.

Cylindrical metal tanks are known and the cylindrical part is typically formed by extrusion, and at least one end closed by preformed elements welded to the cylindrical part, or by a hot or cold working process. For example, WO 2004/096459 describes the manufacture of aluminium cylinders from tubes produced by extrusion through a porthole die. The longitudinal welds formed during the extrusion process are conditioned by running a rotating probe along the extrusion welds. This is said to have the effect of producing finely divided crystal grains in the weld regions. Solution treatment in this case appears to be carried out during extrusion and before the probe is applied.

In the present invention, the starting material is a plate of metal preferably an alloy capable of being hardened by heat treatment for example by precipitation hardening. The plate is rolled into a tube so that its opposite parallel edges are brought together to face one another, and the facing edges areas are welded. A similar technique is known for the manufacture of steel cylinders; for example, US 5,152,452, describes the manufacture of steel cylinders for the storage of high pressure fluids. The method involves cold rolling a steel plate into a tube and welding along the joint using fusion welding such as TIG, MIG or electron beam welding. The ends of the cylinder are subsequently formed by swaging.

It is known that the cylindrical part of a pressure cylinder is potentially the most highly stressed part, and any weld formed longitudinally along the cylindrical part will thus be a potential line of weakness in what is already deemed to be the most highly stressed part. In the present invention we use friction stir welding (FSW) to provide a reliable joint of enhanced strength.

Friction stir welding is a relatively new technique. The basic process is described, for example, in WO 93/10935 and is typically used to join two workpieces. The process involves plunging a rotating or reciprocating probe into the workpieces to be joined, and moving the probe along the line of the join. The heat generated by the frictional engagement of the probe with the workpieces generates an area of plasticised material which, after passage of the probe, joins across the join line to weld the workpieces together.

Friction stir welding is capable of providing joints having better mechanical properties than can be obtained by fusion welding processes such as TIG or MIG. In addition, the grain size in the weld region may be refined. Unfortunately, this refined grain size, because it is heavily worked, may be unstable and prone to develop excessively large grains during subsequent heat treatment. Such large grains in the heat treated weld zone are unacceptable in tanks especially in tanks designed to contain fluids under pressure. The present invention provides a method of manufacturing heat treated friction stir welded tanks that avoids the presence of large grains in the final tank.

In accordance with the present invention there is provided a method of manufacturing a tank or liner for use in a pressure vessel, said method comprising the steps of:
1) forming one or more metal plates into a tube with one pair of opposite edges facing one another to form a longitudinal joint line; and
2) friction stir welding the opposite edges together along the joint line;
3) cold working at least a part of the friction stir welded region; and
4) heat treating the tube at a temperature above the recrystallisation temperature after cold working.

The metal tubes are preferably made from alloys that can be strengthened by heat treatment. This allows the plate to be conveniently shaped into a cylinder before welding and the subsequent cold working operations to be carried out. Such heat treatable alloys include those that can be strengthened by some means, for example by precipitation hardening using for example, aluminium alloys. Other alloys that may be strengthened using precipitation hardening include magnesium alloys, copper alloys, titanium alloys, nickel alloys or steels. Phase transformation techniques may also be used for hardening , for example with steels.

Precipitation hardenable aluminium alloys are particularly preferred especially the AA2000, AA6000, AA7000 and AA8000 series as defined in the International Alloy Designations and Chemical Composition Limits for Wrought Aluminum and Aluminum Alloys published by The Aluminum Association as revised January 2001. Specific preferred aluminium alloys are AA6061, AA7032, AA7060 and AA7475.

Precipitation hardening includes a solution treatment to take soluble elements into solution followed by a low temperature precipitation treatment.

The term "plate" is intended to cover rectangular or square plates and plates shaped to suit rolling into a tube that does not have a uniform cross section along its length. The plate may be of uniform or variable thickness. The term "plate" means rolled product with a thickness of not less than 0,152mm (0.006 inches). This includes sheet, which generally has a thickness between 0,152mm (0.006 inches) and 6,35mm (0.250 inches) and plate having a thickness of not less than 6,35mm (0.250 inches).

In the present invention, at least part of the friction stir weld is subjected to cold working. By cold working, we mean deformation at a temperature below that at which significant recovery or recrystallisation occurs in the weld or in the parent metal. Drawing is one example of a cold working operation that can be applied to a cylinder. Ironing is another example.

In the present invention the welded tank is heat treated after friction stir welding and cold working. The heat treatment step may comprise annealing at a temperature that allows significant recovery or preferably recrystallisation to occur. In aluminium alloys, a suitable annealing treatment may be carried out at 350 to 475°C. Alternatively the heat treatment step may comprise solution treatment in which a heat treatment step is followed by cooling at a rate sufficient to keep all or most of the soluble elements in solution. Solution treatment is carried out by heating the alloy to a temperature at which all or most of the soluble elements are taken into solution (typically 400 to 545°C for aluminium alloys) and then cooling at a sufficient rate to hold most or all of the soluble elements in solution.

The solution treated alloy may then be subjected to a precipitation treatment at room temperature or an elevated temperature for example 90-200°C, preferably 105-200°C, to increase the strength. The age hardening may be carried out in a single step at a substantially constant temperature. Alternatively it may involve two or more stages each stage at a different temperature. T73 temper initial patented by Sprowls, Patent No. US 3,198,676. But there are numerous adaptations designed to suit individual alloys and applications, see for example US 4,477,292 and US 5,108,520.

It is known that a friction stir welded joint may exhibit excessive grain growth when subjected to heat treatment under conditions where recrystallisation can occur. Suitable conditions for grain growth arise during annealing and during solution treatment.

Solution heat treatment of friction stir welded joints in aluminium alloys is discussed in US 2005/0011932. The problem addressed in this patent application arises as a result of increased crystalline grain size which occurs during solution heat treatment in that part of the joint which has been subjected to plastic deformation during the friction stir welding process. Since a coarse grain structure is not favourable to good mechanical characteristics, it transpires that a process (solution heat treatment) which is intended to improve mechanical properties actually degrades them in a critical area, namely along the welded joint line.

US2005/0011932 describes a method of avoiding the growth of coarse grains by adjusting the heat treatment conditions before friction stir welding.

This requires a special high temperature treatment preferably applied before the ingot is hot rolled and optionally cold rolled to form plate. The technique is intended primarily for the aerospace industry where the use of specially treated materials is not prohibited by cost. The present invention provides a more cost effective means of overcoming the problem dealt with in US 2005/0011932 without the use of specially produced starting material.

In the present invention the solution heat treatment step is preceded by the step of subjecting at least part of the friction stir welded region of the welded tube to a cold working operation. Preferably this is a cold drawing operation or an ironing operation i.e. one carried out at a temperature of less than 100 °C.

The cold working operation will itself have the effect of modifying the grain shape in the as cold worked cylinder but, more importantly, it has been found that the drawing operation has the effect of acting against the tendency of a subsequent heat treatment to increase grain size in the friction stir welded area.

It may be desirable to carry out an annealing operation after friction stir welding but before the cold working step has been applied to the welded tube. This may be necessary if the process of forming the tube before friction stir welding makes it too hard for further drawing but there is a risk that this annealing operation will cause large grains to appear in the friction stir weld. These large grains can be refined by cold working and then once more heat treating (annealing or solution treating) the weld area.

The amount of cold working required will depend on the composition of the alloy, the friction stir welding conditions and the heat treatment cycle used. The amount chosen must be sufficient to avoid secondary grain growth in both the parent and the weld metal. Secondary grain growth is particularly prone to occur at relatively low degrees of cold work.

Cold working by drawing reduces or expands the cylinder diameter, and reduces the wall thickness of the cylinder. Typically, during the drawing operation, the wall thickness of the cylinder will be reduced from 5mm to 2.5mm - a thickness reduction of 50%. In practice as little as 20% cold working is sufficient to avoid the growth of coarse grains during solution treatment. Larger amounts of cold work will probably require a multi-stage drawing operation, with annealing of the cylinder being carried out between each stage.

In an embodiment, only the central part of the cylinder is subjected to drawing, leaving the ends at their original thickness so that they are ready for the step of forming the ends of the cylinder - see below. Alternatively the whole length of the cylinder can be subject to the drawing operation, but the ends are subjected to a lesser degree of drawing so that the wall thickness at the ends is greater, ready for the step of forming the ends.

Prior to the drawing operation, it is advantageous to abrade the inside and outside surfaces of the cylinder to reduce any surface irregularities introduced during the welding process. Such abrasion can be confined to the welded area, but preferably the whole of the inside and outside surfaces of the cylinder are abraded to provide a completely uniform surface preparatory to the drawing operation. Abrasion can be realised by a sanding or grinding process.

The final step in the manufacturing process - that of forming the ends - can be carried out by attaching pre-formed ends by welding and/or by necking down the cylinder end by a forming process such as spinning or swaging. In the present invention it is preferred to close one or both ends by a hot spin forming process. For this purpose, it is preferred that the end or ends of the tube to be formed have a greater wall thickness than the remainder of the tube so that there is a sufficient thickness of metal to carry out the spin forming process. This can be achieved by machining but, as described above, the drawing operation can be used to create a cylinder whose ends are thicker than the central part. Thus it is simply a matter of choosing an appropriate thickness for the plate used as the starting material.

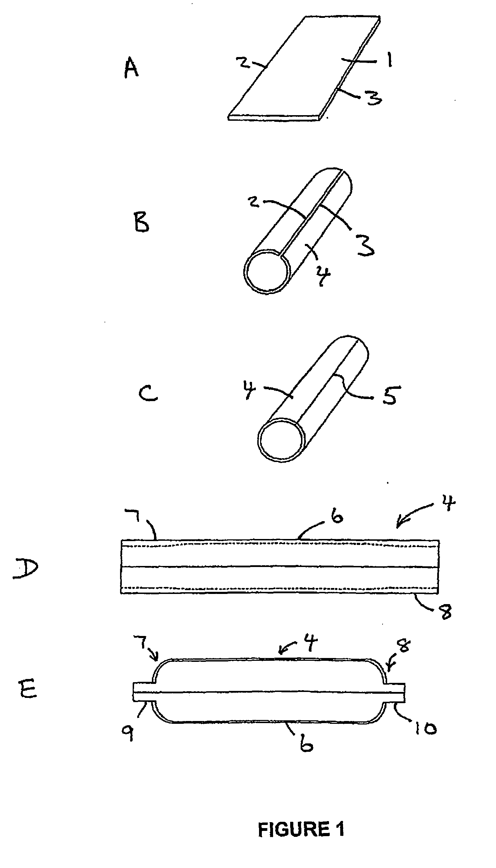

In order that the invention may be better understood, an embodiment thereof will now be described by way of example only and with reference to the accompanying drawing in which Figure 1 illustrates several of the steps in the manufacture of a cylindrical pressure vessel by the method of the invention.

Figure 1 comprises a series of drawings labelled A to E showing diagrammatically the stages in the formation of a cylinder from a rectangular plate.

The manufacturing process starts with a square or rectangular plate 1 having opposite parallel edges 2, 3. The plate is made of aluminium alloy such as AA6061 alloy. The alloy is preferably annealed before starting in order to prevent damage during the subsequent processes. The thickness of the plate will depend upon the desired wall thickness for the cylinder. Typically, for fabricating a liner, the plate thickness might be about 5mm. The plate 1 is roll formed into an open circular tube 4 (Figure 1B) and is placed in a clamping fixture (not shown) so that the edges 2, 3 are pushed together (Figure 1 C) to form a line 5 extending longitudinally of the cylinder. Friction stir welding is now carried out along the line 5 to join the edges 2, 3 together by a single longitudinal weld line.

As mentioned previously, friction stir welding is carried out by drawing a rotating or reciprocating probe through the workpiece, along the weld line. In this application it is desirable that the whole thickness of the plate is welded since a weld through only part of the thickness will inevitably leave a line of irregularity, and therefore weakness, on the surface, most likely the inside surface, where the weld has not penetrated. For this reason, it is desirable that the probe penetrates sufficiently deeply into the joint thickness to ensure welding right through and, in practice, this will usually mean that the probe itself penetrates right through the workpiece during welding.

It will be apparent that the tube could also be fabricated by two or more rectangular plates which are roll formed into arcuate members which can then be clamped in a fixture to form a tube and friction stir welded by means of multiple longitudinal welds. For example, two rectangular plates could be roll formed into respective 180° arcuate members which could then be joined to form a circular tube by means of two friction stir welded joints.

The welded tube is next subjected to a sanding process in which the inside and outside surfaces of the cylinder are rotation sanded to provide a uniform surface, free from rolling, machining or welding irregularities. This is intended to remove stress points during the subsequent operations. After sanding, the tube is annealed to an "O" condition, and then lubricant is applied to the inner and outer surfaces in order to prepare the tube for the next operation.

The welded tube is next subjected to a drawing operation during which the length of the tube increases, and its wall thickness decreases, typically by about 50%. The drawing operation, which is carried out cold - i.e. at less than 100°C - involves forcing the tube into a suitably shaped die. The result of the drawing operation is shown in Figure 1D, and it will be seen that the wall thickness of the central portion 6 of the tube 4 has reduced, but that at the ends 7, 8 is greater. The reason for this difference is to leave the ends with a sufficient thickness of material to withstand the subsequent forming operations carried out on the ends (see below). If preformed ends are to be used, then the thickened walls at the ends are not needed, and the whole length of the tube can be subject to drawing. Typically, with the aforementioned plate thickness of 5mm, the wall thickness in the central area 6 will be about 2.5mm, while the end regions 7, 8 remain at 5mm wall thickness, or may be subject to just a small amount of drawing, reducing the wall thickness by a lesser amount.

Note that it may be necessary to carry out the cold drawing in stages, interposed by annealing to soften the metal and relieve internal stresses.

The thickened ends 7, 8 of the tube are next trimmed to the required length, if necessary, and are subject to a hot spin forming process to dome the ends and form respective necks 9, 10, as illustrated in Figure 1E. Obviously the exact shape of the ends will be dictated by the particular requirements; for example, one end may be closed off completely.

The semi-finished cylinder is now subject to solution heat treatment. During this treatment the cylinder is heat treated to about 1000°F (537°C), subjected to rapid water quenching to a T4 condition, and then artificially aged to a T6 condition.

The purpose of the solution heat treatment is to improve the mechanical strength of the material, particularly in the weld area. However, it is known that solution heat treatment has the effect of increasing the crystalline grain size and this degrades certain mechanical properties such as ductility and fracture strength which are, of course, important for pressurised containers. The cold drawing operation has been found to counter this effect, preventing, or at least reducing, the formation of coarse grains during solution heat treatment.

Observations made during the manufacturing process indicate that, after solution treatment cylinders that had been friction stir welded and not subsequently cold worked, the friction stir welded area exhibits large grains which can be seen with the naked eye whilst the base material exhibits fine grains. Furthermore the friction stir welded tube that has been subject to 50% cold drawing followed by solution heat treatment exhibits fine grains in both the base material and the welded area.

Finally the necks are trimmed and the threads and port configurations are machined. The outside surface may now be subjected to another sanding operation in order to remove any handling defects and create a uniform exterior finish before the finished cylinder is thoroughly washed and rinsed to remove any cutting fluids and metal shavings from the machining operations.

The finished cylinder can be used as is for storing pressurised and non-pressurised fluids. However the cylinder can also be used as a liner in a composite wrapped cylinder, for example in composite hoop wrapped cylinders or composite full wrapped cylinders employing, typically, carbon fibre filament for wrapping.

In order to test the viability of the manufacturing process, the friction stir welded area was closely monitored during the manufacturing operations to ensure it was compatible with the forming and machining operations:
- Drawing operation: There was no evidence of material separation and the appearance of the FSW line was reduced.
- Spin forming operation: The weld region performed well; the material did not split or crack and the material build-up in the FSW area was the same as in the remaining area. There was no visible evidence of the FSW line in the spin formed dome / neck region.
- Machining operation: There was no evidence of the FSW line on the machined port surface or the threads.

Tests of liners and cylinders manufactured by the above described steps from a starting material comprising a rectangular plate of 4mm thickness AA6061 aluminium alloy revealed the following results:
Liner Tests: (Mechanical properties)
   - Tensile strength: 50,000 Psi. (344.7MPa)
   - Yield strength: 43,800 Psi. (302MPa)
   - Elongation: 14%.
Liner burst:
   - Burst pressure: 1,300 Psi. (9MPa)
   - Burst Location: Longitudinal fracture in the centre of the sidewall about 130mm away from the friction stir weld line.
   - The burst mode and pressure is similar to results from a seamless liner.

Filament Wound Cylinder Tests per DOT CFFC Specifications:
Virgin Burst Test:
   - The cylinder passed the burst test by bursting at a pressure of 15,100 Psi (104.1 MPa).
   - The burst fracture was away from the friction stir weld line.
   - The DOT CFFC Specification require a minimum burst pressure of 3.4 x Service pressure (3.4 x 3,000) = 10,200 Psi (70.3 MPa).
Cycle Test:
   • The cylinder passed the required cycle test by completing 10,000 cycles at the service pressure of 3,000 Psi (20.7 MPa).
Burst After Cycle Test:
   - After completion of the 10,000 cycles at 3,000 Psi (20.7 MPa) followed by completion of 30 cycles at 5,000 Psi (34.5 MPa) the cylinder was submitted for burst test. The cylinder was pressurized and reached 15,000 Psi (104.1 MPa) before it burst in the sidewall away from the friction stir weld line.
   - The DOT CFFC Specification require a minimum burst pressure of 3.06 x Service pressure (3.06 x 3,000) = 9,180 Psi (63.3 MPa).
Test Conclusion:
   - The fully wrapped composite cylinders passed the virgin burst test, the cycle test and the burst after cycle test with result similar to production cylinders made with a seamless liner. Both the production cylinders and the friction stir welded cylinders were made with the same liner tooling, composite material, winding pattern and were manufactured to the same liner and cylinder design.
   - All test results were in compliance with the requirements of the DOT CFFC Specification (Fifth Revision) dated March 2007, described in Appendix A entitled "Basic requirements for fully wrapped carbon-fiber reinforced aluminum lined cylinders".

## Claims

1. A method of manufacturing a tank or liner for use in a pressure vessel, said method comprising the steps of:
a) forming one or more metal plates (1) into a tube (4) with one pair of opposite edges (2;3) facing one another to form a longitudinal joint line; and
b) friction stir welding the opposite edges (2;3) ogether along the joint line;
c) cold working at least a part of the friction stir welded region; and
d) heat treating the tube (4) at a temperature above the recrystallisation temperature after cold working.

2. A method as claimed in claim 1, wherein said one or more metal plates (1) comprises an aluminium alloy.

3. A method as claimed in claim 1 or 2, wherein the heat treatment step includes annealing within a range 350 to 475°C.

4. A method as claimed in claim 1 or 2 wherein the heat treatment step comprises solution treatment whereby all or most of the soluble elements are taken into solution.

5. A method as claimed in claim 4 wherein during the solution treatment the tube (4) is heated to a temperature of between 400 to 545°C and subsequently cooled, optionally by quenching in air or water, at a rate to hold most or all of the soluble elements in solution.

6. A method as claimed in claim 4 or 5 wherein subsequent to solution treatment the tube (4) is subjected to precipitation hardening at room temperature and/or one or more precipitation hardening operations at elevated temperature, the elevated temperature preferably lying within the range 90 to 200°C.

7. A method as claimed in any preceding claim wherein the cold working is carried out at a temperature of less than 100°C.

8. A method as claimed in claim 7, wherein the cold working operation includes a cold drawing and/or ironing operation.

9. A method as claimed in claim 8 wherein the cold working operation reduces the thickness of the tube (4) by more than 20%.

10. A method as claimed in any one of claim 7 to 9, wherein one or more annealing operations are performed, the or each annealing operation being performed before, between or after one or more cold working operations.

11. A method as claimed in claim 8 wherein only the central part of the tube (4) is subjected to drawing leaving the thickness of ends of the tube (4) substantially unaltered or reduced to a lesser degree than the central part.

12. A method as claimed in any preceding claim wherein the tube (4) is formed from precipitation hardenable aluminium alloys.

13. A method as claimed in any one of claims 1 to 11 wherein the tube (4) is formed from one or more alloys in the group including magnesium alloys, copper alloys, titanium alloys, nickel alloys or steels

14. A method as claimed in claim 13 wherein the aluminium alloys are chosen from the AA2000, AA6000, AA7000 and AA8000 series and, preferably from the group comprising AA6061, AA7032 and AA7475.

15. A metal tank or liner for a pressure vessel having a friction stir weld along at least a portion of its length, at least a portion of the weld region having been subjected to cold working and heat treatment operations whereby said at least portion of the weld region has a higher burst strength than the parent metal surrounding the weld region.

16. A metal tank or liner as claimed in claim 15 wherein the weld region has substantially the same thickness as the surrounding parent metal.

## Patentansprüche

1. Verfahren zur Herstellung eines Tanks oder einer Auskleidung zur Verwendung in einem Druckbehälter, das Verfahren umfassend die folgenden Schritte:
a) das Formen von einer oder mehreren Metallplatten (1) zu einem Rohr (4), wobei ein Paar gegenüberliegender Kanten (2; 3) sich gegenüberstehen, um eine längs verlaufende Nahtlinie zu bilden; und
b) das Rührreibschweißen der gegenüberliegenden Kanten (2; 3) entlang der Nahtlinie;
c) das Kaltformen von zumindest einem Teil der rührreibgeschweißten Region; und
d) das Wärmebehandeln des Rohrs (4) bei einer Temperatur oberhalb der Rekristallisationstemperatur im Anschluss an das Kaltformen.

2. Verfahren gemäß Anspruch 1, wobei die eine oder mehreren Metallplatten (1) aus einer Aluminiumlegierung bestehen.

3. Verfahren gemäß Anspruch 1 oder 2, wobei der Schritt des Wärmebehandelns das Glühen in einem Bereich von 350 bis 475 °C einschließt.

4. Verfahren gemäß Anspruch 1 oder 2, wobei der Schritt des Wärmebehandelns das Lösungsglühen einschließt, wodurch alle bzw. die meisten löslichen Elemente in Lösung übergehen.

5. Verfahren gemäß Anspruch 4, wobei das Rohr (4) während des Lösungsglühens auf eine Temperatur von 400 bis 545 °C erhitzt und anschließend abgekühlt wird, was optional durch Abschreckung in Luft oder Wasser erfolgt, und zwar mit einer Rate, bei der die meisten oder alle löslichen Elemente in Lösung gehalten werden.

6. Verfahren gemäß Anspruch 4 oder 5, wobei das Rohr (4) im Anschluss an das Lösungsglühen der Ausscheidungshärtung bei Raumtemperatur und/oder einer oder mehreren Ausscheidungshärtungsoperationen bei erhöhter Temperatur ausgesetzt wird, wobei die erhöhte Temperatur vorzugsweise im Bereich zwischen 90 und 200 °C liegt.

7. Verfahren gemäß einem der vorherigen Ansprüche, wobei das Kaltformen bei einer Temperatur von weniger als 100 °C durchgeführt wird.

8. Verfahren gemäß Anspruch 7, wobei die Kaltformungsoperation eine Kaltzieh- und/oder Abstreckziehoperation einschließt.

9. Verfahren gemäß Anspruch 8, wobei durch die Kaltformungsoperation die Dicke des Rohrs (4) um mehr als 20 % verringert wird.

10. Verfahren gemäß einem der Ansprüche 7 bis 9, wobei eine oder mehrere Glühoperationen durchgeführt werden, wobei die oder jede Glühoperation vor, zwischen oder nach einer oder mehreren Kaltformungsoperationen durchgeführt wird.

11. Verfahren gemäß Anspruch 8, wobei nur der zentrale Teil des Rohrs (4) dem Ziehen ausgesetzt wird, wodurch die Dicke der Enden des Rohrs (4) im Wesentlichen unverändert bleibt oder in einem geringeren Ausmaß verringert wird als der zentrale Teil.

12. Verfahren gemäß einem der vorherigen Ansprüche, wobei das Rohr (4) aus ausscheidungshärtbaren Aluminiumlegierungen gebildet ist.

13. erfahren gemäß einem der Ansprüche 1 bis 11, wobei das Rohr (4) aus einem oder mehreren Legierungen aus der Gruppe gebildet ist, zu der Magnesiumlegierungen, Kupferlegierungen, Titanlegierungen, Nickellegierungen oder Stähle gehören.

14. Verfahren gemäß Anspruch 13, wobei die Aluminiumlegierungen aus der Serie AA2000, AA6000, AA7000 und AA8000 ausgewählt sind und vorzugsweise aus der Gruppe, zu der AA6061, AA7032 und AA7475 gehören.

15. Metalltank bzw. Metallauskleidung für einen Druckbehälter, der bzw. die eine Rührreibschweißnaht in mindestens einem Abschnitt seiner bzw. ihrer Länge aufweist, wobei mindestens ein Abschnitt des Schweißbereichs Kaltformungs- und Wärmebehandlungsoperationen ausgesetzt wurde, wodurch mindestens der Abschnitt des Schweißbereichs eine höhere Berstfestigkeit hat als das Grundmetall, welches den Schweißbereich umgibt.

16. Metalltank bzw. Metallauskleidung gemäß Anspruch 15, wobei der Schweißbereich im Wesentlichen dieselbe Dicke hat wie das umgebende Grundmetall.

## Revendications

1. Un procédé de fabrication d'un réservoir ou d'un revêtement intérieur pour une utilisation dans une cuve sous pression, ledit procédé comprenant les opérations suivantes :
a) la formation d'une ou plusieurs plaques métalliques (1) dans un tube (4) avec une paire de bords opposés (2, 3) se faisant face de façon à former une ligne de jonction longitudinale, et
b) le soudage par friction-malaxage des bords opposés (2, 3) l'un contre l'autre le long de la ligne de jonction,
c) le travail à froid d'au moins une partie de la zone soudée par friction-malaxage, et
d) le traitement à chaud du tube (4) à une température supérieure à la température de recristallisation après le travail à froid.

2. Un procédé selon la Revendication 1, où lesdites une ou plusieurs plaques métalliques (1) contiennent un alliage d'aluminium.

3. Un procédé selon la Revendication 1 ou 2, où l'opération de traitement à chaud comprend une opération de recuit dans une plage de température de 350 à 475°C.

4. Un procédé selon la Revendication 1 ou 2 où l'opération de traitement à chaud comprend un traitement en solution grâce auquel tous les ou la plupart des éléments solubles sont mis en solution.

5. Un procédé selon la Revendication 4 où, au cours du traitement en solution, le tube (4) est chauffé à une température se situant entre 400 et 545°C et est ensuite refroidi, éventuellement par trempage dans l'air ou dans l'eau, à une vitesse capable de maintenir la plupart ou tous les éléments solubles en solution.

6. Un procédé selon la Revendication 4 ou 5 où, suite au traitement en solution, le tube (4) est soumis à un durcissement par précipitation à température ambiante et/ou à une ou plusieurs opérations de durcissement par précipitation à une température élevée, la température élevée se situant de préférence dans la plage allant de 90 à 200°C.

7. Un procédé selon l'une quelconque des Revendications précédentes où le travail à froid est réalisé à une température inférieure à 100°C.

8. Un procédé selon la Revendication 7, où l'opération de travail à froid comprend une opération d'étirage à froid et/ou de chaudronnage.

9. Un procédé selon la Revendication 8 où l'opération de travail à froid réduit l'épaisseur du tube (4) de plus de 20%.

10. Un procédé selon l'une quelconque des Revendications 7 à 9, où une ou plusieurs opérations de recuit sont exécutées, l'opération ou chaque opération de recuit étant exécutée avant, entre ou après une ou plusieurs opérations de travail à froid.

11. Un procédé selon la Revendication 8, où uniquement la partie centrale du tube (4) est soumise à étirage laissant l'épaisseur des extrémités du tube (4) sensiblement non altérée ou réduite dans une moindre mesure que la partie centrale.

12. Un procédé selon l'une quelconque des Revendications précédentes où le tube (4) est formé à partir d'alliages d'aluminium durcissables par précipitation.

13. Un procédé selon l'une quelconque des Revendications 1 à 11, où le tube (4) est formé à partir d'un ou plusieurs alliages du groupe se composant d'alliages de magnésium, d'alliages de cuivre, d'alliages de titane, d'alliages de nickel ou d'aciers.

14. Un procédé selon la Revendication 13 où les alliages d'aluminium sont choisis parmi les séries AA2000, AA6000, AA7000 et AA8000, et de préférence dans le groupe se composant de AA6061, AA7032 et AA7475.

15. Un réservoir métallique ou un revêtement intérieur pour une cuve sous pression possédant une soudure par friction-malaxage le long d'au moins une partie de sa longueur, au moins une partie de la zone de soudure ayant été soumise à des opérations de travail à froid et de traitement à chaud grâce auxquelles ladite au moins une partie de la zone de soudure possède une résistance à l'éclatement plus élevée que le métal parent entourant la zone de soudure.

16. Un réservoir métallique ou un revêtement intérieur selon la Revendication 15 où la zone de soudure possède sensiblement la même épaisseur que le métal parent l'entourant.
